# EUROPEAN PATENT APPLICATION

(11) **EP 0 754 734 A1**
(43) Date of publication of application: **22.01.1997**
(21) Application number: 95305096.0
(22) Date of filing: 19.07.1995
(51) Int. Cl.: C09B 61/00

(54) **A process for the preparation of natural dyes**

(71) Applicant: ALPS TEXTILE LIMITED, IN-201007 Ghaziabad (IN)
(72) Inventor: Agarwal, Krishan Kumar, Ghaziabad-201001 (IN); Gulrajani, Mohan Lal, New Delhi-110 016 (IN)
(74) Representative: Watkins, David

(57) **Abstract**

A process for producing dyestuffs from plant materials. The dried, cleaned and pulverized plant material is subjected to the step of extraction consisting of a first soaking in an aqueous solution of pH 4 to 10, followed by a second step of heating. The solution is filtered and concentrated.

## Description

### BACKGROUND OF THE INVENTION

This invention relates to a process for producing dyestuffs from plant materials.

### PRIOR ART

A process known in the art and practised over several decades for producing dyestuffs from plant material consists in drying the gathered plant material at a temperature not exceeding 45°C

Dyestuffs produced by such a known process have restricted applications in that the colour are not reproducible. Further, such a process is crude and not suitable for industrial applications.

Another known process for producing dyestuffs is described in U.S. patent no.4156077, which consists in treating sunflower seed husks at ambient temperature and in a non-oxidizing atmosphere with an acid solution. The acid solution is selected from water and an organic or inorganic acid, organic solvent and aqueous solution of an organic or inorganic acid and pure liquid organic acid. Such a step of acid treatment comprises the step of extraction. The resulting solution is filtered and the filtrate concentrated under vacuum at a temperature between 35 to 40°C to obtain anthocyanin. Such a process is restricted only to the production of anthocyanin. Furthermore, such a process provides a low yield.

Yet another process for producing dyestuff from plant material has been described in U.S. patent no.5042989. Such a process consists in drying the plant materials to a temperature of at least 70°C, and then pulverizing the dried plant. The pH of the pulverized dried plant is adjusted to an acidic or base state. Preferably, the pulverized plant material is adjusted to the pH value at which the plant material existed in the fresh state. Such a step of adjustment of the pH value is effected so that all the colours found in the natural plant are retained.

### OBJECTS OF THE INVENTION

An object of the present invention is to propose a process for producing dyestuffs from various different plant materials and not restricted to a single plant material.

Another object of this invention is to propose a process for producing dyestuffs from plant materials which provides a high yield.

Still another object of this invention is to propose a process for producing dyestuffs from plant materials and, wherein, certain of such plant materials are capable of producing more than one dyestuff from the same plant.

### DESCRIPTION OF THE PREFERRED EMBODIMENTS OF THE INVENTION

According to this invention there is provided a process for producing dyestuffs from plant materials comprising in the steps of:
a) extraction of the dye from the plant material;
b) said step of extraction comprising a first step of soaking the dried, cleaned and pulverized plant material in an aqueous solution at pH 4 to 10 followed by a second step of heating the solution;
c) filtering the solution;
d) concentrating the filtrate to obtain the dyestuff.

The process of the present invention includes the step of washing, drying and pulverizing the plant material. Hitherto, and in the known process, it was necessary to complete the drying process rapidly, or to effect preservation steps so as to avoid changes in colouration. However, it is no longer necessary to complete the drying process rapidly as such changes in colouration are no longer of any consequenceby the process of the present invention.

Further, the plant materials may have only a dull colouration after being dried and pulverized, due to the extraneous vegetable matter contained therein. However, lustrous and strong colours are still obtained, due to the subsequent steps of the process of the present invention, in which the pulverized plant materials are subjected to a step of extraction, filtering and concentration. The step of extraction consists in a first step of soaking followed by a second step of heating.

The agricultural produce that can be employed in the process of the present invention, by way of example and without implying any limitation thereto are ,such as:
- (a) Wood: : Log wood, sappanwood, weld, patangwood etc.
- (b) Roots: : Madder, beetroot, chay, al, turmeric and dolu.
- (c) Leaves: : Henna, onion peel, parsley and indigo.
- (d) Flowers: : Sunflower, tesu, marigold, harsingar tun etc.
- (e) Seeds: : Annatto
- (f) Fruits and berries: : Black berries, harda, barberry and pomegranate peels.

One of the distinct advantages of the present invention is that the same process, by changing certain of the parameters, can be employed for all of the agricultural produces. It has also now been found that the same agricultural produce contains a plurality of different dyes. Thus, depending upon the pH of the extraction solution, the required colour can be obtained from the agricultural produce. Furthermore, once a particular colour is extracted from the solution, the filtered residue may be subjected to a plurality of subsequent extraction steps at different pH values to obtain different colours.

In accordance with this invention the agricultural produce is first tested to determine the moisture content and, if necessary, subjected to the step of drying. It has been found that the agricultural produce should have a moisutre content not greater than 3%, as the shelf life of the dye otherwise is reduced.

Once cleaned and dried, the plant materials are pulverized, for example, in mortar-type mills, bearer mills, rotary strainer mills, abraders, or the like.

The step of extraction consists in a first step of soaking the pulverized plant material in an aqueous solution at pH 4 to 10. For this purpose, the acids are selected from minerals acids such as sulphuric or hydrochloric acid or organic acids such as acetic or formic acid or inorganic acids to provide an acidic pH to the solution. By way of example, the base is selected from sodium hydroxide or carbonate, plant ash or any other inorganic base so as to provide. are alkali pH to the aqueous solution.

The extraction medium has a material to liquor ratio of 1:3 to 1:8.

The pH value is one of the parameters for determining the colour to be extracted from the plant material. Thus, for example, it is possible to obtain blue dyestuff if the aqueous alkaline solution comprises soda water and the plant material is dried and pulverised elderberries. If citric acid or another organic acid is used instead, a red dyestuff is obtained.

As it has been found with elderberries, the same plant material can produce different dyestuff depending on the pH of the soaking medium. Thus, and as by way of example, if the soaking medium is acidic, a first dyestuff is extracted. However, if the soaking medium is alkaline, then a second dyestuff may be obtained from the same plant material. Further, certain plant materials may produce a yet third dyestuff at a neutral pH.

The step of soaking is carried out for a period of 1 to 24 hours and at a temperature of 30 to 50°C. It is believed that an enzymatic reaction occurs during such a step of soaking for obtaining a better yield of the dyestuff. Thus, yet another parameter for controlling the production and yield of dyestuff is that of the soaking temperature and period. It has been found that if temperatures higher than 50°C or lower than 30°C are employed for the soaking step, such a temperature may adversely affect the enzymatic reaction, which is not a desired property.

The slurry so obtained is subjected to the second step of extraction by mixing it with water and heating to a temperature of 50 to 100°C under atmospheric pressure and 40 to 70°C under vacuum for 1 to 10 hours. The control of temperature and the related heating period is necessary to avoid a decomposition or change in the chemical structure of the dye. Thus, if a temperature greater than 100°C is employed under atmospheric pressure, a dye decomposition or degradation may take place. Further, certain of the impurities may get dissolved. If temperatures less than 50°C are employed under atmospheric conditions, the dye extraction would be too slow, the yield impaired and the time period for the step of extraction considerable.

The slurry is subjected to the step of filtration to provide a mother liquor cotaining the extracted dye. The residue obtained from the step of filtration may be further treated to the step of heating by addition of water to obtain a further filterate. Alternatively, the residue is added to a different aqueous solution having a different pH to obtain a different dyestuff.

The mother liquor is then subjected to the step of concentration. Such a step of concentration is effected by the step of indirect heating to avoid a decomposition or degradation of the dyestuff.

In the instance where the dyestuff is required in a liquid form, the step of drying is not required. However, if the dyestuff is required in a particulate or granular form, then the concentrated liquid is subjected to the step of drying, such as hot air or spray drying, to a temperature of 70 to 150°C.

The dyestuff produced by the process of the present invention has various applications. It may be used for dyeing or printing of fibres, yarn, fabric or pieces. The article to be dyed or printed may be of cotton, wool, silk, rayon, jute, flax and mixtures and blends thereof including those containing synthetic fibres. The dyestuff may also be employed for leather application, such as for tanning, dyeing and printing of leathers. The dyestuff may also be used for wood polishes, dyeing of papers, in inks and cosmetics. The applications enumerated hereinabove are only illustrative in nature and not restricted thereto.

Additives may be added to the dyestuff. Thus, a preservative such as tartaric acid, citric acid, or dry alkalis such as soda, sodium hydroxide or other organic or inorganic salts can be added to the dyestuff. Salts or borax or salts of benzoic acid can be added in order to protect the dyestuff from pest attack. Still further, a mordant may be added to the dyestuff.

Reference is now made to the ensuing examples, which are not intended to be construed in a restrictive manner.

### EXAMPLE 1

Before extaction the Anar was crushed to small pieces. Soaking was carried out at 30°C for overnight i.e. for 16-17 hrs. Material to liquor ratio (MLR) was maintained at 1:3. Extraction was carried out at 80 - 90°C for 2 hrs. After extraction filteration was carried out using Wattman filter paper.

It was observed that soaking for over night increases the dye yield. Dye yield at alkaline pH was 58% as compared to 18% in case of neutral and 10% in case of acidic pH. It was noted that extract at alkaline pH was brownish black in colour whereas at neutral and acidic pH it was of light brown colour.

### EXAMPLE 2:

Before extracting, Dolu was crushed to small pieces. Soaking was carried out at 30°C for over night i.e. for 16-17 hrs. Material to liquor ratio (MLR) was maintained at 1:5. Extraction was carried out at 80 - 90°C for 2 hrs. After extraction filteration was carried out using Wattman filter paper.

It was observed that soaking for over night increases the dye yield. Dye yield at alkaline pH was 25% as compared to 6.8% in case of neutral and 6% in case of acidic pH. It was noted that extract at alkaline pH was blood red in colour whereas at neutral and acidic pH it was of golden yellow in colour..

### EXAMPLE 3:

Before extracting, tesu was crushed to small pieces. Soaking was carried out at 30°C for over over night i.e. for 16-17 hrs. Material to liquor ratio (MLR) was maintained at 1:10. Extraction was carried out at 80 - 90^{o}C for 2 hrs. After extraction filteration was carried out using Wattman filter paper.

It was observed that soaking for over night did not showed much difference in the dye yield. Dye yield at alkaline pH was 28% as compared to 21.6% in case of neutral and 20.9% in case of acidic pH. It was noted that extract at alkaline pH was orange in colour whereas at neutral aid acidic pH it was of yellow in colour.

**Table 1**

| **percentage of dye extracted** | | | | | | |
|---|---|---|---|---|---|---|
| **pH** | **ANAR** | | **DOLU** | | **TESU** | |
| | **W/o** | **after** | **w/o** | **after** | **w/o** | **after** |
| 5 | 9.10 | 9.85 | 4.70 | 6.00 | 20.90 | 20.95 |
| 7 | 19.70 | 17.80 | 6.50 | 6.80 | 21.20 | 21.60 |
| 9.5 | 37.95 | 58.20 | 11.00 | 25.25 | 25.10 | 27.90 |
| Note W/o : percentage of dye extracted without soaking material. after : percentage of dye extracted after soaking the raw material for overnight. pH : pH was maintained by using sodium carbonate (0.1 M) and acetic acid. | | | | | | |

## Claims

1. A process for producing dyestuffs from plant materials comprising in the steps of:
1) extraction of the dye from the plant material;
b) said step of extraction comprising a first step of soaking the dried, cleaned and pulverized plant material in an aqueous solution at pH 4 to 10 followed by a second step of heating the solution;
c) filtering the solution;
d) concentrating the filtrate to obtain the dyestuff.

2. A process as claimed in claim 1 wherein the step of soaking is carried out at a temperature of 30 to 50^{o}C for a period of 1 to 24 hours.

3. A process as claimed in claim 1 wherein the solution is heated to a temperature of 40 to 100^{o}C.

4. A process as claimed in claim 3 wherein the solution is heated to a temperature of 40 to 100^{o}C under atmospheric pressure and 40 to 70^{o}C under vacuum.

5. A process as claimed in claim 1 wherein the residue obtained from the step of filtration is heated to a temperature of 40 to 100^{o}C and recycled in the process.

6. A process as claimed in claim 1 wherein the concentrated dyestuff is dried at a temperature of 70 to 150^{o}C to obtain the dyestuff in particulate or granular form.

7. A process as claimed in claim 1 wherein a mordants are added to the dyestuff.

8. A process as claimed in claim 1 wherein additives such as preservatives and pest protective agents are added to said dyestuff.

9. A process as claimed in claim 1 wherein the soaked solution has a material to liquor ratio of 1:3 to 1:8.
